(19) Europäisches Patentamt
European Patent Office
Office européen des brevets

(11) EP 1 411 098 A1

(12) **EUROPÄISCHE PATENTANMELDUNG**

(43) Veröffentlichungstag:
**21.04.2004 Patentblatt 2004/17**

(51) Int Cl.$^7$: **C09J 153/00**, C08F 293/00

(21) Anmeldenummer: **03021406.8**

(22) Anmeldetag: **23.09.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **17.10.2002 DE 10248380**

(71) Anmelder: **tesa AG**
**20253 Hamburg (DE)**

(72) Erfinder:
- **Husemann, Marc**
  **22605 Hamburg (DE)**
- **Dollase, Thilo**
  **22397 Hamburg (DE)**

(54) **Haftklebrige Formteile**

(57) Formteil bestehend aus einem oder mehreren Blockcopolymeren auf Polyacrylatbasis oder Mischungen enthaltend derartige Blockcopolymere, gekennzeichnet durch inhärente haftklebrige Eigenschaften.

EP 1 411 098 A1

**Beschreibung**

Die Erfindung betrifft Formteile auf Basis von Blockcopolymeren, die Herstellung derartiger Formteile und deren Verwendung.

Haftklebebänder sind seit langer Zeit bekannt und sehr weit verbreitet. Früher wurden Haftklebemassen für die entsprechenden Haftklebebänder aus Lösung oder aus Dispersion hergestellt. Zur Steigerung der Effizienz des Herstellungsprozesses werden zunehmend Hotmelt-Verfahren eingesetzt, da bei diesen Verfahren während des Beschichtungsprozesses auf Lösungsmittel verzichtet werden kann.

In der kunststoffverarbeitenden Industrie werden ebenfalls eine Vielzahl von Thermoplasten aus der Schmelze verarbeitet und auf diesem Wege Formteile für die verschiedensten Anwendungen hergestellt. Eine sehr verbreitete Methode zur Herstellung von komplizierten Formteilen ist das Spritzgießverfahren. Weiterhin werden auch verschiedene Injektions- und Wickelverfahren angewendet. Zum Aufschmelzen werden sehr häufig Extruder eingesetzt, welche die Thermoplaste aufschmelzen, fördern und beispielsweise mit großem Druck durch eine Düse in eine Form drücken. Neben den vorgenannten Verfahren werden weiterhin Thermoplaste in Formen gepresst oder nachträglich, beispielsweise durch Fräs- oder Drehtechnik, bearbeitet.

Die in der Kunststoffindustrie hergestellten Formteile werden sehr vielseitig für die verschiedensten Zwecke, insbesondere als Bauteile, eingesetzt, wobei diese Teile aber nicht haftklebrig sind.

Für bestimmte Anwendungen kann es von Vorteil sein, wenn solche Formteile eine eigene Haftklebrigkeit besitzen und somit die Verarbeitung erleichtern. Das gilt insbesondere für abdichtende Materialien, die eine gewisse Flexibilität und für die Verarbeitung zur Fixierung eine leichte Haftklebrigkeit besitzen sollten.
Es ist sehr schwierig, solche Formteile aus konventionellen Materialien, beispielsweise aus Polyacrylatmassen entsprechend dem Stand der Technik, herzustellen, da unter anderem Vernetzungsmethoden wie die UV-Härtung oder die ES-Härtung aufgrund der komplexen Strukturen und der hohen Schichtdicken der Formteile nicht angewendet werden können.

Aufgabe der Erfindung ist es, Formteile für unterschiedliche Anwendungsbereiche zur Verfügung zu stellen, welche neben den hierfür erforderlichen physikalischen Eigenschaften (beispielsweise Elastizität, hinreichende Eigenstabilität...) eine eigene Haftklebrigkeit aufweisen.

Die Aufgabe wird überraschend gelöst durch den Einsatz von Haftklebemassen auf Polyacrylatblockcopolymerbasis. Dementsprechend betrifft die Erfindung Formteile bestehend aus einem oder mehreren Blockcopolymeren auf Polyacrylatbasis oder Mischungen enthaltend derartige Blockcopolymere, gekennzeichnet durch haftklebrige Eigenschaften.

Bei einer bevorzugten Ausführungsform des erfindungsgemäßen Formteils weisen die Blockcopolymere eine Abfolge von "harten" Polymerblöcken $P_H$ mit einer niedrigen Glasübergangstemperatur und "weichen" Polymerblöcken $P_W$ mit einer hohen Glasübergangstemperatur auf, sehr vorteilhaft eine Abfolge von zumindest einem Polymerblock oder Copolymerblock $P_H$ mit einer Glasübergangstemperatur von nicht mehr als 10 °C und von zumindest einem Polymerblock oder Copolymerblock $P_W$ mit einer Glasübergangstemperatur von zumindest 20 °C.

Die Bezeichnung "Polymerblock" soll hier und im folgenden sowohl Polymerblöcke aus nur einer Monomerensorte als auch Copolymerblöcke aus zwei oder mehreren Monomeren umfassen.

Bei einer weiteren vorteilhaften Ausführungsform der Erfindung weisen die Blockcopolymere zumindest eine Triblockstruktur der Form $P_W$-$P_H$-$P_W$ und/oder der Form $P_H$-$P_W$-$P_H$ auf.

Insbesondere erfindungsgemäß bestehen die Formteile aus Blockcopolymeren, in denen die Polymerblöcke $P_H$ von der Art P(A) und die Polymerblöcke $P_H$ von der Art P(B) sind. Dabei stellt P(A) einen Polymerblock aus einem oder mehreren Monomeren einer Monomerengruppe A und P(B) einen Polymerblock aus einem oder mehreren Monomeren einer Monomerengruppe B dar.
Für eine nächste bevorzugte Ausführungsform der Erfindung können die Blockcopolymere auch Copolymerblöcke der Form P(A/C) (im Sinne von $P_H$) und/oder P (B/D) (im Sinne von $P_W$) aufweisen, wobei die Polymerblöcke P(A) und/oder P(B) der oben dargestellten Blockcopolymere ganz oder teilweise durch die Polymerblöcke P(A/C) beziehungsweise P(B/D) substituiert sein können. Der Ausdruck P(A/C) verweist dabei auf Copolymerblöcke aus Monomeren der Monomerengruppe A und einer Monomerengruppe C, entsprechend stellt P(B/D) einen Copolymerblock aus Monomeren der Monomerengruppe B und einer Monomerengruppe D dar.

Von Vorteil ist es weiterhin, wenn ein Teil der Blockcopolymere $P_W$ und/oder $P_H$ oder alle Blockcopolymere $P_W$ und/oder $P_H$ zumindest eine funktionelle Gruppe aufweisen, welche sich in einer radikalischen Polymerisationsreaktion inert verhält und welche eine Vernetzungsreaktion der Polymere zu fördern vermag.

Es ist für die erfinderischen Formteile, insbesondere in Form der in dieser Schrift dargestellten Ausführungsformen, von Vorteil, wenn zumindest ein Blockcopolymer einen symmetrischen Aufbau derart aufweist, dass in der Kettenlänge und/oder der chemischen Struktur identische Polymerblöcke $P_W$ und/oder dass in der Kettenlänge und/oder der chemischen Struktur identische Polymerblöcke $P_H$ vorliegen.
Besonders bevorzugt weisen die eingesetzten Polyacrylathaftklebemassen in Längs- und in Querrichtung ein unterschiedliches Zug/Dehnungsverhalten auf.
Es ist günstig, wenn zumindest ein Blockcopolymer, bevorzugt mehrere oder alle Blockcopolymere, eines oder mehrere der folgenden Kriterien aufweist:

- eine Molmasse $M_n$ zwischen 25.000 und 600.000 g/mol, bevorzugt zwischen 30.000 und 400.000 g/mol, besonders bevorzugt zwischen 50.000 und 300.000 g/mol,
- eine Polydispersität $D = M_w/M_n$ von nicht mehr als 3,
- einen Anteil an harten Polymerblöcke $P_H$ zwischen 5 und 49 Gew.-%, bevorzugt zwischen 7,5 und 35 Gew.-%, insbesondere zwischen 10 und 30 Gew.-%, bezogen auf die Summe aus harten Polymerblöcken $P_H$ und weichen Polymerblöcken $P_W$
- ein oder mehrere aufgepropfte Seitenketten.

Insbesondere kann das Verhältnis der Kettenlängen der Polymerblöcke $P_H$ zu denen der Polymerblöcke $P_W$ so gewählt werden, dass die Polymerblöcke $P_H$ als disperse Phase ("Domänen") in einer kontinuierlichen Matrix der Polymerblöcke $P_W$ vorliegen, insbesondere als kugelförmige oder verzerrt kugelförmige oder zylinderförmige Domänen.

Einige vorteilhafte Ausführungsformen, welche sich erfindungsgemäß besonders vorteilhaft verwenden lassen, sind im folgenden beispielhaft dargestellt.

Als für die erfindungsgemäßen Formteile hervorragend verwendbare Haftklebemassen lassen sich beispielsweise solche Haftklebemassen auf der Basis von Blockcopolymeren des allgemeinen Typs P(B)-P(A/C)-P(B) einsetzen, bei denen jedes Blockcopolymer aus einem mittleren Copolymer-Block P(A/C) und zwei Endpolymerblöcken P(B) besteht,
wobei

- P(A/C) ein Copolymer aus Monomeren der Monomerengruppen A und C repräsentiert, wobei P(A/C) eine Glasübergangstemperatur von 10 °C bis -80 °C besitzt, wobei zumindest ein Teil der Monomere der Monomerengruppe C mindestens eine funktionelle Gruppe besitzen, welche sich in einer radikalischen Polymerisationsreaktion inert verhält, und welche zur Steigerung der Kohäsion des Blockcopolymers dient,
- P(B) ein Polymer aus Monomeren der Monomerengruppe B repräsentiert, wobei P(B) eine Glasübergangstemperatur von 20 °C bis 175 °C besitzt,
- der Polymer-Block P(B) in dem Copolymer-Block P(A/C) unlöslich ist und die Blöcke P(B) und P(A/C) nicht mischbar sind.

Dabei kann in günstiger Weise die kohäsionssteigernde Wirkung des Copolymers P(A/C) durch Bindungen zwischen den einzelnen Blockcopolymeren P(B)-P(A/C)-P(B) hervorgerufen werden, wobei zumindest eine funktionelle Gruppe der Monomeren der Monomerengruppe C eines Blockcopolymer-Makromoleküls mit zumindest einem weiteren Blockcopolymer-Makromolekül in Wechselwirkung tritt. In besonders vorteilhafter Weise ruft die funktionelle Gruppe der (einpolymerisierten) Monomeren der Monomerengruppe C mittels Dipol-Dipol-Wechselwirkungen und/oder Wasserstoffbrückenbindungen die Steigerung der Köhasion hervor. Besonders bevorzugt ist die funktionelle Gruppe der Monomeren der Monomerengruppe C eine Carbonsäuregruppe, eine Hydroxygruppe oder eine tert.-Butylgruppe. Weiter besonders bevorzugt wird als Monomer der Monomerengruppe C zumindest eine der folgenden Verbindungen eingesetzt: Acrylsäure, Hydroxyethylacrylat, Hydroxypropylacrylat, Methacrylsäure, Methylmethacrylat, Hydroxyethylmethacrylat, Hydroxypropylmethacrylat, tert.-Butylacrylat, Itaconsäureanhydrid, Itaconsäure, Acrylamide, wie z.B. N-tert.-Butylacrylamid, N-Isopropylacrylamid oder Dimethylacrylamid, und Maleinsäureanhydrid. Vorteilhaft kann die zur Vernetzung befähigte funktionelle Gruppe der Monomeren der Monomerngruppe C eine ungesättigte Gruppe sein, welche zur strahlenchemischen Vernetzung befähigt ist, insbesondere durch eine Vernetzung, welche durch UV-Bestrahlung oder durch Bestrahlung mit Elektronenstrahlen hervorgerufen wird. Es hat sich als günstig herausgestellt, wenn die zur Vernetzung befähigte funktionelle Gruppe der Monomeren der Monomerengruppe C ein ungesättigter Alkylrest mit 3 bis 8 Kohlenstoffatomen ist, welcher mindestens eine C-C-Doppelbindung aufweist. Weiterhin besonders bevorzugt ist die zur Vernetzung befähigte funktionelle Gruppe der Monomeren der Monomerengruppe C eine solche funktionelle Gruppe, welche durch den Einfluss thermischer Energie zu einer Vernetzungsreaktion befähigt ist. Vorteilhaft wird die funktionelle Gruppe der Monomeren der Monomerengruppe C als Hydroxy-, Carboxy-, Epoxy-, Säureamid-, Isocyanato- oder Aminogruppe gewählt.
Als Monomere der Monomerengruppe C kann in günstiger Weise zumindest eine Verbindung der folgenden allgemeinen Formel

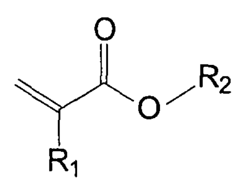

eingesetzt werden, wobei $R_1$ = H oder $CH_3$ und $-OR_2$ die funktionelle Gruppe nach einem der oberen Ansprüche darstellt oder beinhaltet. Dabei können die Monomere der Monomerengruppe C derart gewählt werden, dass sie die Glasübergangstemperatur des Copolymer-Blocks P(A/C) auf $T_G$ < 10 °C herabsetzen.

Als Monomere der Monomerengruppe A wird bevorzugt zumindest eine Verbindung der folgenden allgemeinen Formel

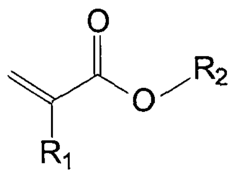

eingesetzt wird, wobei $R_1$ = H oder $CH_3$ und $R_2$ aus der Gruppe der verzweigten oder unverzweigten, gesättigten Alkylgruppen mit 4 - 14 Kohlenstoffatomen.

Die Monomere der Monomerengruppe B werden bevorzugt derart ausgewählt, dass die entstehenden Polymer-Blöcke P(B) in der Lage sind, eine 2-Phasen-Domänenstruktur mit den Copolymer-Blöcken P(A/C) auszubilden. Der Anteil der Polymerblöcke P(B) liegt sehr bevorzugt zwischen 10 und 60 Gew.-%, insbesondere zwischen 15 und 40 Gew.-% des gesamten Blockcopolymers.

Weiterhin liegt der Gewichtsanteil an Monomeren der Monomerengruppe C im Verhältnis zu Monomeren der Monomerengruppe A vorteilhaft zwischen 0,1 und 20, insbesondere zwischen 0,5 und 5.

Eine weitere Haftklebemasse, welche in hervorragender Art und Weise im erfinderischen Sinne verwendet werden kann, basiert auf Blockcopolymere des allgemeinen Typs P(A)-P(B)-P(A) oder des Typs P(A/C) -P(B)-P(A/C) , wobei jedes Blockcopolymer aus einem mittleren (Co-)Polymerblock P(B) und zwei End(co)polymerblöcken P(A) bzw. P(A/C) besteht, wobei

- P(A) ein (Co-)Polymerblock aus zumindest einem Monomer der Monomerengruppe A repräsentiert, wobei P(A) eine Glasübergangstemperatur von 10 °C oder tiefer besitzt, bzw. P(A/C) ein Copolymerblock aus Monomeren der Monomergruppen A und C repräsentiert, wobei P(A/C) eine Glasübergangstemperatur von 10 °C oder tiefer besitzt, wobei zumindest ein Teil der Monomere der Monomerengruppe C mindestens eine funktionelle Gruppe besitzen, welche sich in einer radikalischen Polymerisationsreaktion inert verhält, und welche zur Steigerung der Kohäsion des Blockcopolymers dient,
- P(B) ein (Co-)Polymerblock aus zumindest einem Monomer der Monomerengruppe B repräsentiert, wobei P(B) eine Glasübergangstemperatur von 20 °C oder höher besitzt,
- der (Co-)Polymerblock P(B) in dem (Co-)Polymerblock P(A) bzw. P(A/C) unlöslich ist, die Blöcke P (B) und P(A) nicht mischbar sind.

Bevorzugt enthält zumindest ein Teil der Monomere der Monomerengruppe C zumindest eine funktionelle Gruppe, welche sich in einer radikalischen Polymerisationsreaktion inert verhält, und welche zur Erhöhung der Kohäsion des Blockcopolymers dient; insbesondere durch Bindungen zwischen den einzelnen Blockcopolymeren, wobei zumindest eine funktionelle Gruppe der (einpolymerisierten) Monomere der Monomerengruppe C eines Blockcopolymer-Makromoleküls mit zumindest einem weiteren Blockcopolymer-Makromolekül in Wechselwirkung tritt; insbesondere durch eine Vernetzungsreaktion. Die funktionelle Gruppe zur Erhöhung der Kohäsion kann sehr vorteilhaft eine Hydroxy-, eine Carboxy-, eine Epoxy-, eine Säureamid-, eine Isocyanato- oder eine Aminogruppe, eine einen Photoinitiator zur UV-Vernetzung beinhaltende Gruppe oder eine ungesättigte Gruppe sein.

Weiter vorteilhaft besitzt der Block P(A) bzw. P(A/C) eine Glasübergangstemperatur zwischen -80 °C und 10 °C und/oder der Block P(B) eine Glasübergangstemperatur zwischen 25 °C und 180 °C.

Bevorzugt liegt der Anteil der (Co-)Polymerblöcke P(B) zwischen 10 und 60 Gew.-%, insbesondere zwischen 15 und 40 Gew.-% des gesamten Blockcopolymers.

In günstiger Weise liegt der Gewichtsanteil der Monomere der Monomerengruppe C im Verhältnis zu den Monomeren der Monomerengruppe A zwischen 0,1 und 20, insbesondere zwischen 0,5 und 10.

Eine weitere erfindungsgemäß vorteilhaft verwendbare Haftklebemasse ist eine solche auf Basis von Blockcopolymeren des allgemeinen Typs P(B/D)-P(A) -P(B/D), wobei jedes Blockcopolymer aus einem mittleren Copolymer-Block P(A) und zwei Endpolymerblökken P(B/D) besteht, wobei

- P(A) einen Polymerblock aus einem oder mehreren Monomeren der Monomerengruppe A repräsentiert, wobei P(A) eine Glasübergangstemperatur unterhalb 10 °C, insbesondere von 10 °C bis -80 °C besitzt,
- P(B/D) ein Polymer aus zumindest jeweils einem Monomeren der Monomerengruppen B und D repräsentiert, wobei der Block P(B/D) eine Glasübergangstemperatur von 20 °C bis 175 °C besitzt, und wobei zumindest ein teil der Monomeren der Monomerengruppe D zumindest eine zur Vernetzung befähigte funktionelle Gruppe enthält,
- der Polymer-Block P(A) in dem Copolymer-Block P (B/D) unlöslich ist, die Blöcke P(A) und P(B/D) nicht mischbar sind.

Hierbei ist vorteilhaft die zur Vernetzung befähigte funktionelle Gruppe der Monomeren der Monomerengruppe D eine ungesättigte Gruppe, welche zur strahlenchemischen Vernetzung befähigt ist, insbesondere zu einer Vernetzung, welche durch UV-Bestrahlung oder durch Bestrahlung mit Elektronenstrahlen hervorgerufen wird. Dies kann bevorzugt ein ungesättigter Alkylrest sein, welcher mindestens eine C-C-Doppelbindung aufweist. Die zur Vernetzung befähigte funktionelle Gruppe der Monomeren der Monomerengruppe D kann weiterhin vorteilhaft eine solche Gruppe sein, welche durch den Einfluss thermischer Energie zu einer Vernetzungsreaktion befähigt ist. Als funktionelle Gruppe der Monomeren der Monomerengruppe D kann vorteilhaft eine Hydroxy-, eine Carboxy- , eine Epoxy-, eine Säureamid-, eine Isocyanato- oder eine Aminogruppe gewählt werden.
Als Monomere aus der Monomerengruppe D wird in günstiger Vorgehensweise zumindest eine Verbindung eingesetzt, welche die Glasübergangstemperatur des Copolymer-Blocks P(B/D) auf $T_G$ > 20 °C heraufsetzt.
Als Monomere der Monomerengruppen B und D werden bevorzugt Monomere gewählt, die dazu führen, dass der Block P(B/D) in der Lage ist, eine 2-Phasen Domänenstruktur mit den Copolymer-Block P(A) auszubilden, wobei die Monomerengruppen B und D auch identisch sein können.
Vorteilhaft liegt der Anteil der Polymerblöcke P(B/D) zwischen 10 und 60 Gew.-%, insbesondere zwischen 15 und 40 Gew.-% des gesamten Blockcopolymers liegt. Weiter vorteilhaft liegt der Gewichtsanteil von Monomeren der Monomerengruppe D im Verhältnis zu Monomeren der Monomerengruppe B zwischen 0,1 und 20, insbesondere zwischen 0,5 und 5.

Erfindungsgemäß vorteilhaft lassen sich auch orientierte Acrylatblockcopolymere verwenden. Hierbei kann beispielsweise eine Haftklebemasse auf Basis von zumindest einem Blockcopolymer verwendet werden, wobei die Gewichtsanteile der Blockcopolymere in Summe zumindest 50 % der Haftklebemasse ausmachen, wobei zumindest ein Blockcopolymer zumindest teilweise auf Basis von (Meth-)Acrylsäurederivaten zusammengesetzt ist, wobei weiterhin zumindest ein Blockcopolymer mindestens die Einheit P(B)-P(A)-P(B) aus wenigstens einem Polymerblock P(B) und wenigstens zwei Polymerblöcken P(A) aufweist und wobei

- P(B) unabhängig voneinander Homo- oder Copolymerblöcke aus Monomeren der Monomerengruppe B repräsentieren, wobei die Polymerblöcke P(B) jeweils eine Erweichungstemperatur im Bereich von + 20 °C bis + 175 °C aufweisen,
- P(A) einen Homo- oder Copolymerblock aus Monomeren der Monomerengruppe A repräsentiert, wobei der Polymerblock P(A) eine Erweichungstemperatur im Bereich von - 130 °C bis + 10 °C aufweist,
- die Polymerblöcke P(B) und P(A) nicht homogen miteinander mischbar sind,

wobei

das haftklebende System orientiert ist, indem es eine Vorzugsrichtung besitzt, wobei der in Vorzugsrichtung gemessene Brechungsindex $n_{MD}$ größer ist als der in einer Richtung senkrecht zur Vorzugsrichtung gemessene Brechungsindex $n_{CD}$.

Insbesondere bevorzugt beträgt die Differenz $\Delta n = n_{MD} - n_{CD}$ mindestens $1 \cdot 10^{-5}$. Weiterhin vorteilhaft weist die Haftklebemasse einen Rückschrumpf von zumindest 5 % auf, gemessen wie folgt:
Die Haftklebemasse wurde aus der Schmelze durch eine Düse auf ein silikonisiertes Trennpapier beschichtet. Parallel zur Beschichtungsrichtung des Hotmelts wurden Streifen von mindestens 30 mm Breite und 20 cm Länge geschnitten. Bei Masseaufträgen von 130 g/m$^2$ wurden je 3 Streifen, bei 50 g/m$^2$ 8 Streifen übereinander laminiert, um vergleichbare Schichtdicken zu erhalten. Der derart erhaltene Körper wurde dann auf exakt 20 mm Breite geschnitten und an den jeweiligen Enden in einem Abstand von 15 cm mit Papierstreifen überklebt. Der auf diese Weise präparierte Prüfkörper wurde dann bei RT vertikal aufgehängt und die Änderung der Länge über die Zeit verfolgt, bis keine weitere Schrumpfung der Probe mehr festgestellt werden konnte. Die um den Endwert reduzierte Ausgangslänge wurde dann bezogen auf die Ausganglänge als Rückschrumpf in Prozent angegeben.

Vorteilhaft lässt sich der Aufbau zumindest eines Blockcopolymers durch eine oder mehrere der folgenden allgemeinen Formeln beschreiben:

$$P(B)\text{-}P(A)\text{-}P(B) \quad (I)$$

$$P(A)\text{-}P(B)\text{-}P(A)\text{-}P(B)\text{-}P(A) \quad (II)$$

$$[P(A)\text{-}P(B)]_nX \quad (III)$$

$$[P(A)\text{-}P(B)]_nX[P(B)]_m \quad (IV),$$

- wobei n = 3 bis 12, m = 3 bis 12 und X einen multifunktionellen Verzweigungsbereich darstellt
- wobei die Polymerblöcke P(B) unabhängig voneinander Homo- oder Copolymerblöcke aus Monomeren der Monomerengruppe B repräsentieren, wobei die Polymerblöcke P(B) jeweils eine Erweichungstemperatur im Bereich von + 20 °C bis + 175 °C aufweisen,
- und wobei die Polymerblöcke P(A) unabhängig voneinander Homo- oder Copolymerblöcke aus Monomeren der Monomerengruppe A repräsentieren, wobei die Polymerblöcke P(A) jeweils eine Erweichungstemperatur im Bereich von - 130 °C bis + 10°C aufweisen.

Weiterhin können vorteilhaft Blends aus polyacrylatbasierenden Blockcopolymeren eingesetzt werden.
So lässt sich hervorragend ein Polymerblend mehrerer Blockcopolymere entsprechend den vorstehenden Ausführungen einsetzen, weiterhin auch Blend eines oder mehrerer Blockcopolymere entsprechend der vorstehenden Ausführungen mit zumindest einem Diblockcopolymer P(B)-P(A),

- wobei die Polymerblöcke P(B) unabhängig voneinander Homo- oder Copolymerblöcke aus Monomeren der Monomerengruppe B repräsentieren, wobei die Polymerblöcke P(B) jeweils eine Erweichungstemperatur im Bereich von + 20 °C bis + 175 °C aufweisen,
- und wobei die Polymerblöcke P(A) unabhängig voneinander Homo- oder Copolymerblöcke aus Monomeren der Monomerengruppe A repräsentieren, wobei die Polymerblöcke P(A) jeweils eine Erweichungstemperatur im Bereich von - 130 °C bis + 10°C aufweisen,
  und/oder mit zumindest einem Polymeren P'(B) und/oder P'(A),
- wobei die Polymere P'(B) Homo- und/oder Copolymere aus Monomeren der Monomerengruppe B repräsentieren, wobei die Polymere P'(B) jeweils eine Erweichungstemperatur im Bereich von + 20 °C bis + 175 °C aufweisen,
- wobei die Polymere P'(A) Homo- und/oder Copolymere aus Monomeren der Monomerengruppe A repräsentieren, wobei die Polymere P'(A) jeweils eine Erweichungstemperatur im Bereich von - 130 °C bis + 10 °C aufweisen.

Weiterhin hervorragend entsprechend des erfindungsgemäßen Gedanken einsetzbar ist ein Blend aus zumindest zwei Komponenten K1 und K2, jede Komponente basierend auf zumindest einem Blockcopolymer P1 beziehungsweise P2 einsetzen,

- wobei das zumindest eine Blockcopolymer P1 der Komponente K1 mindestens die Einheit P(B1)-P(A1)-P(B1) aus wenigstens einem Polymerblock P(A1) (im Sinne von $P_H$) und wenigstens zwei Polymerblöcken P(B1) (im Sinne von $P_W$) aufweist, wobei
  - P(B1) unabhängig voneinander Homo- oder Copolymerblöcke aus Monomeren der Monomerengruppe B repräsentiert, wobei die Polymerblöcke P(B1) jeweils eine Erweichungstemperatur im Bereich von + 20 °C bis + 175 °C aufweisen,
  - P(A1) einen Homo- oder Copolymerblock aus Monomeren der Monomerengruppe A repräsentiert, wobei der Polymerblock P(A1) eine Erweichungstemperatur im Bereich von - 130 °C bis + 10 °C aufweist,
  - die Polymerblöcke P(B1) und P(A1) nicht homogen miteinander mischbar sind,
- wobei das zumindest eine Blockcopolymer P2 der Komponente K2 mindestens die Einheit P(A2)-P(B2)-P(A2) aus wenigstens zwei Polymerblöcken P(A2) (im Sinne von $P_H$) und wenigstens einem Polymerblock P(B2) (im Sinne von $P_W$) aufweist, und wobei
  - P(B2) einen Homo- oder Copolymerblock aus Monomeren der Monomerengruppe B repräsentiert, wobei der Polymerblock P(B2) eine Erweichungstemperatur im Bereich von + 20 °C bis + 175 °C aufweisen,
  - P(A2) unabhängig voneinander Homo- oder Copolymerblöcke aus Monomeren der Monomerengruppe A repräsentiert, wobei die Polymerblöcke P(A2) jeweils eine Erweichungstemperatur im Bereich von - 130 °C bis + 10 °C aufweist,
  - die Polymerblöcke P(B2) und P(A2) nicht homogen miteinander mischbar sind,
- und wobei der Blend ein zumindest zweiphasiges System ausbildet.

Vorteilhaft beträgt das Verhältnis V der im Blend eingesetzten Menge $m_{K2}$ der Komponente K2 zu der im Blend eingesetzten Menge $m_{K1}$ der Komponente K1 bis zu 250 Gewichtsteile K2 auf 100 Gewichtsteile K1, also $V = m_{K2}/m_{K1} \leq 2{,}5$.

Bevorzugt sind die Blöcke P(B1) mit den Blökken P(B2) und/oder deren jeweils korrespondierenden Polymere P'(B1) mit P'(B2) und/oder die Blöcke P(A1) mit den Blöcken P(A2) und/oder deren jeweils korrespondierenden Polymere P'(A1) mit P'(A2) verträglich. Weiter vorteilhaft besitzen die Polymerblöcke P(B1) und die Polymerblöcke P(B2) und/oder die Polymerblöcke P(A1) und die Polymerblöcke P(A2) eine identische Homo- und/oder Copolymerzusammensetzung.

Es ist günstig, wenn die mittlere Kettenlänge LA2 der Polymerblöcke P(A2) des Blockcopolymers P2 die mittlere Kettenlänge LA1 des Polymerblocks P(A1) des Blockcopolymers P1 nicht übersteigt, wobei vorteilhaft LA2 mindestens 10 % kleiner als LA1, sehr vorteilhaft LA2 mindestens 20 % kleiner ist als LA1 ist.

Weiterhin ist es von Vorteil, wenn die Polymerblöcke P(Bi) (i = 1,2,...) als disperse Phase ("Domänen") in einer kontinuierlichen Matrix der Polymerblöcke P(Ai) vorliegen, bevorzugt als kugelförmige oder verzerrt kugelförmige Domänen, wobei dieser Zustand insbesondere durch Einstellung des Verhältnisses $V_{Li}$ der mittleren Kettenlängen LBi der Polymerblöcke P(Bi) zu den mittleren Kettenlängen LAi der Polymerblöcke P(Ai) der Blockcopolymere Pi erzielt wird, sehr bevorzugt durch Einstellung des Verhältnisses $V_{L1}$ des Blockcopolymers P1.

Neben den vorstehend besonders geeigneten Haftklebemassen seien auch noch diejenigen erwähnt, welche Sternstrukturen aufweisen, etwa entsprechend

$[P_H\text{-}P_W]_nX$
$[P_W\text{-}P_H]_nX$
$[P_W\text{-}P_H\text{-}P_W]_nX$
$[P_H\text{-}P_W\text{-}P_H]_nX$

oder allgemein

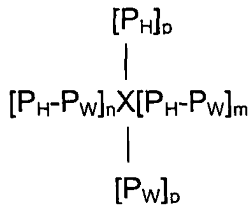

wobei m, n, p, q unabhängig voneinander = 0, 1, 2, 3... und X eine multifunktionelle Verzweigungseinheit darstellt, also ein chemisches Bauelement, über das mehrere Polymerarme miteinander verknüpft sind.

Dabei können auch mehrere Verzweigungseinheiten in den Polymeren vorhanden sein.

Als Monomere A für die Copolymerblöcke P(A), P(Ai) und/oder P(A/C) der erfindungsgemäß verwendeten haftklebrigen Formteile werden vorteilhaft Acrylmonomere oder Vinylmonomere eingesetzt, besonders bevorzugt solche, die die Glasübergangstemperatur des Copolymerblocks P(A/C) - auch in Kombination mit Monomer C - auf unterhalb 10 °C, sehr bevorzugt unterhalb 0 °C herabsetzen.

In sehr vorteilhafter Weise für die erfindungsgemäßen haftklebrigen Formteile wird als Monomere der Monomerengruppe A eine oder mehrere Verbindungen, welche sich durch die folgende allgemeinen Formel beschreiben lassen, eingesetzt.

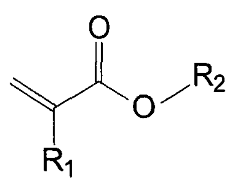

Dabei ist $R_1$ = H oder $CH_3$, der Rest $R_2$ wird gewählt aus der Gruppe der verzweigten oder unverzweigten, gesättigten Alkylgruppen mit 4 bis 14 Kohlenstoffatomen.

Acrylmomonere, die bevorzugt für die erfinderischen haftklebrigen Formteile als Monomere der Monomerengruppe A eingesetzt werden, umfassen Acryl- und Methacrylsäureester mit Alkylgruppen bestehend aus 4 bis 14 C-Atomen, bevorzugt 4 bis 9 C-Atomen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat und deren verzweigten Isomere, wie z.B. 2-Ethylhexylacrylat. Weiterhin werden optional als Monomere der Monomerengruppe A Vinylmonomere aus den folgenden Gruppen eingesetzt:

Vinylester, Vinylether, Vinylhalogenide, Vinylidenhalogenide, Vinylverbindungen mit aromatischen Cyclen und Heterocyclen in $\alpha$-Stellung.

Auch hier seien nicht ausschließlich einige Beispiele genannt: Vinylacetat, Vinylformamid, Vinylpyridin, Ethylvinylether, Vinylchlorid, Vinylidenchlorid, Acrylonitril.

Die Monomere der Monomerengruppe B für die Copolymerblöcke P(B), P(Bi) und/oder P(B/D) der erfindungsgemäßen haftklebrigen Formteile werden bevorzugt derart gewählt, dass die resultierenden Blökke P(B), P(Bi) und/oder P(B/D) in der Lage sind, eine 2-Phasen-Domänenstruktur mit den Copolymer-Blökken P(A), P(Ai) und/oder P(A/C) auszubilden. Voraussetzung hierfür ist die Nichtmischbarkeit der Blöcke P(B), P(Bi) bzw. P(B/D) mit den Blöcken P(A), P(Ai) bzw. P(A/C). In der 2-Phasen-Domänenstruktur bilden sich Bereiche aus, in welchen sich die Blöcke unterschiedlicher (und gegebenenfalls auch gleicher) Ketten ein- und derselben Monomerensorte miteinander mischen. Diese sogenannten Domänen sind eingebettet in einer Matrix der Blöcke der anderen Monomerensorte. Als Charakteristikum besitzt eine solche 2-Phasen-Domänenstruktur zwei Glasübergangstemperaturen.

Mit der Ausbildung zweier Phasen unterschiedlicher Eigenschaften erhält man harte Segmente neben weichen Segmenten.

Vorteilhafte Beispiele für Verbindungen, welche als Monomere der Monomerengruppe B eingesetzt werden, sind Vinylaromaten, Methylmethacrylate, Cyclohexylmethacrylate, Isobornylmethacrylate. Besonders bevorzugte Beispiele für derartige Monomere sind Methylmethacrylat und Styrol.

Als Monomere der Monomerengruppe C werden in bevorzugter Weise Acrylmonomere oder Vinylmonomere eingesetzt, die die Glasübergangstemperatur des Copolymerblocks P(A/C) - auch in Kombination mit Monomeren der Monomerengruppe A - auf unterhalb 0° C herabsetzen. In einer vorteilhaften Variante des erfindungsgemäßen Verfahrens werden Acrylmonomere eingesetzt, insbesondere solche entsprechend der folgenden allgemeinen Formel:

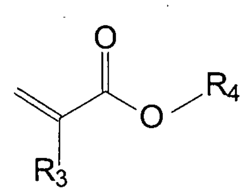

wobei $R_3$ = H oder $CH_3$ ist und der Rest $-OR_4$ die funktionelle Gruppe zur Erhöhung der inneren Festigkeit des haftklebrigen Formteils darstellt oder beinhaltet.

Beispiele für Monomere aus der Monomerengruppe C sind Hydroxyethylacrylat, Hydroxypropylacrylat, Hydroxyethylmethacrylat, Hydroxypropylmethacrylat, Acrylsäure, Methacrylsäure, Methylmetacrylat, t-Butylacrylat, Allylalkohol, Maleinsäureanhydrid, Itaconsäureanhydrid, Itaconsäure, Benzoinacrylat, acryliertes Benzophenon, Acrylamide (wie beispielsweise N-t-Butylacrylamid, N-Isopropylacrylamid, Dimethylacrylamid) und Glyceridylmethacrylat, wobei diese Aufzählung nicht abschließend ist.
Dabei werden bevorzugt gewählt:

a) für Dipol-Dipol-Wechselwirkungen- und/oder Wasserstoffbrücken-bildenden Eigenschaften:

Acrylsäure, Methacrylsäure, Itaconsäure, aber auch Hydroxyethylacetat, Hydroxypropylacetat, Allylalkohol, Acrylamide, Hydroxyethylmetacrylat, Methylmethacrylat

b) zur Vernetzung mit energiereicher Strahlung:

Benzoinacrylat, acryliertes Benzophenon

c) zur thermischen Vernetzung:

Hydroxyethylacrylat, Hydroxypropylacrylat, Hydroxyethylmethacrylat, Hydroxypropylmethacrylat, Acrylsäure, Methacrylsäure, Allylalkohol, Maleinsäureanhydrid, Itaconsäureanhydrid, Itaconsäure, Glyceridylmethacrylat, aber auch alle Acrylamide.

Mit t-Butylacrylat und beispielsweise Stearylacrylat wird eine zusätzliche Steigerung der Glasübergangstemperatur bewirkt. Diese daraus resultierenden Polymere weisen ein höheres Molekulargewicht und eine eingeschränkte Beweglichkeit auf.

Als Monomere der Monomerengruppe D werden in bevorzugter Weise Acrylmonomere oder Vinylmonomere eingesetzt, die die Glasübergangstemperatur des Copolymerblocks P(A/C) - auch in Kombination mit Monomeren der Monomerengruppe B - auf oberhalb 20 °C heraufsetzen.
Besonders bevorzugte Beispiele für Monomere aus der Monomerengruppe C sind acrylierte Photoinitiatoren, wie z.B. Benzoinacrylat oder acryliertes Benzophenon, Hydroxyethylmethacrylat, Hydroxypropylmethacrylat, Acrylsäure, Methacrylsäure, Allylalkohol, Maleinsäureanhydrid, Itaconsäureanhydrid, Itaconsäure, Acrylamid und Glyceridylmethacrylat, wobei diese Aufzählung nicht abschließend ist.

Die Polymerisation kann nach einem an sich bekannten Verfahren oder in Abwandlung eines an sich bekannten Verfahrens durchgeführt werden, insbesondere durch konventionelle radikalische Polymerisation und/oder durch kontrollierte radikalische Polymerisation; letztere ist dabei durch die Anwesenheit geeigneter Kontrollreagenzien gekennzeichnet.

Den haftklebrigen Formteilen können weiterhin vorteilhaft Harze zugemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren vorteilhaften Weiterentwicklung werden zu den Polyacrylaten ein oder mehrere Weichmacher, wie z.B. niedermolekulare Polyacrylate, Phthalate, Walöweichmacher oder Weichharze hinzudosiert.

Die Polyacrylate können des weiteren mit einem oder mehreren Additiven wie Alterungsschutzmitteln, Lichtschutzmitteln, Ozonschutzmitteln, Fettsäuren, Harzen, Keimbildnern, Blähmitteln, Compoundierungsmitteln und/oder Beschleunigern abgemischt sein.

Weiterhin können die haftklebrigen Formteile mit einem oder mehreren Füllstoffen wie Fasern, Ruß, Zinkoxid, Titandioxid, Farbpigmenten, Voll- oder Hohlglas(mikro)kugeln, Mikrokugeln aus anderen Materialien, Kieselsäure, Silikaten und Kreide versetzt sein, wobei auch der Zusatz von blockierungsfreien Isocyanaten möglich ist.

Das haftklebrige Polymer wird vorteilhaft aus der Schmelze heraus weiterverarbeitet. Falls das Polymer nicht in Substanz hergestellt wurde, wird in einer bevorzugten Auslegung das Lösemittel der Polymerisation unter vermindertem Druck z.B. in einem Aufkonzentrationsextruder abgezogen. Beispielsweise können Ein- oder Doppelschneckenextruder eingesetzt werden, die bevorzugt das Lösemittel in verschiedenen oder gleichen Vakuumstufen abdestillieren und über eine Feedvorwärmung verfügen.

Aus dem haftklebrigen Polymer werden die erfindungsgemäßen Formteile hergestellt. Dabei lassen sich hervorragend dreidimensionale haftklebrige Formteile produzieren, wobei nahezu beliebige Formen und Ausmaße gewählt werden können.
In einem sehr bevorzugten Verfahren wird das Polymer im Spritzgieß- oder Spritzgußverfahren verarbeitet. Die Form wird durch das den jeweiligen Master vorgegeben. Die haftklebrigen Formteile können somit innen hohl oder aus dem Vollen gefertigt sein. Durch die Form des Master können die haftklebrigen Formteile auch nahezu jede Form annehmen. Es sind z.B. runde, eckige oder

ovale Formteile zugänglich. In einer bevorzugten Auslegung ist der formgebende Master mit einer Trennschicht/Trennlack/Releaseschicht ausgestattet, der das Entfernen des haftklebrigen Formteils aus dem Master erleichtert.

In einer weiteren Ausführungsform können die Haftklebemassen auch mit Gleitmitteln oder die Haftung vermindernde Substanzen ausgestattet sein, die die Verarbeitung erleichtern.

Ein weiteres Verfahren zur Herstellung der haftklebrigen Formteile umfasst das Pressen von Formteilen. Hier wird unter hohem Druck und Temperaturen der Rohling in die gewünschte Form gepresst. Auch für dieses Herstellverfahren ist die Pressform bevorzugt mit einem Trennlack oder Trennschicht ausgestattet, so dass die haftklebrigen Formteile bedeutend leichter aus der Pressform entfernt werden können.

In einer weiteren Ausführung können die haftklebrigen Formteile durch Blastechnik hergestellt werden. Auf diesem Weg werden besonders bevorzugt hohle Formteile hergestellt.

Weiterhin können auch haftklebrige Formteile durch einen Stanzprozess hergestellt werden. Auch in diesem Prozess wird durch die Stanzform die Form des haftklebrigen Formteils vorgegeben.

Eine weitere Möglichkeit zur Herstellung von haftklebrigen Formteile umfasst das Rotationsformverfahren.

Weiterhin lassen sich vorteilhaft auch geschäumte haftklebrige Formteile herstellen. Die Schäumung kann z.B. sehr bevorzugt durch Zusatz eines Treibgases erreicht werden. Weiterhin kann in einem Extruder das Polymer aufgeschmolzen und durch eine Düse gepresst werden. Durch Einbringen von Schutzgas, wie z.B. Stickstoffgas, lassen sich auch mit dieser Methode geschäumte Formteile herstellen. Durch unterschiedliche Düsen können hier wiederum unterschiedliche haftklebrige Formteile hergestellt werden.

In Hinblick auf spezielle Anwendungsgebiete der haftklebrigen Formteile kann es von Vorteil sein, wenn eine oder mehrere Stabilisierungsfolien im haftklebrigen Formteil enthalten sind. Weiterhin können zur Stabilisierung auch optional Fasern oder Füllstoffe zur Stabilisierung enthalten sein.

Es kann von Vorteil sein, die Formteile auf speziellen Trägern zu fixieren. Besonders geeignet sind Papier, Gewebe oder Folien mit einer Trennwirkung. Solche Trennwirkung kann z.B. durch eine Beschichtung mit Polysiloxanen oder mit fluorierten Polymeren/Oligomeren erreicht werden.

Erfindungsgemäß ist es sehr vorteilhaft, wenn die Formteile eine hinreichend hohe Haftklebrigkeit aufweisen, um ihr Eigengewicht mindestens 30 min auf zumindest einem der Materialien Polyethylen, ABS (Acrylnitril-Butadien-Styrol-Copolymere) und/oder Polystyrol zu halten, wenn sie mit einem Anpressdruck von 19,6 $N/cm^2$ auf eine Probefläche dieses Materials gedrückt wurden.

Weiterhin ist Gegenstand der Erfindung die Verwendung der haftklebrigen Formteile zur einseitigen oder doppelseitigen Verklebung von Substraten, als Dichtmaterial oder als Bauteile, insbesondere in der Automobilindustrie.

Ein Anwendung sind z.B. (insbesondere dreidimensionale) Klebepads, um Papierzettel temporär an unterschiedlichen Substraten oder unterschiedliche Substrate miteinander zu fixieren.

Für die Abdichtung werden haftklebrige Formteile bevorzugt, die einen hohen elastischen Anteil besitzen. Auch in diesem Fall wurde die Fixierung durch die Haftklebrigkeit erleichtert.

Die Erfindung soll im folgenden durch einige Beispiele näher erläutert werden, ohne sich hierdurch unnötig beschränken zu wollen.

<u>Beispiele</u>

**Testmethoden :**

**A. Gelpermeationschromatograpie (GPC)**

Die Bestimmung der mittleren Molekulargewichtes $M_N$ und $M_W$ und der Polydisperistät PD erfolgte durch Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 μ, $10^3$ Å, ID 8.0 mm x 50 mm verwendet. Zur Auftrennung wurden die Säulen PSS-SDV, 5 μ, $10^3$ sowie $10^5$ und $10^6$ mit jeweils ID 8.0 mm x 300 mm eingesetzt. Die Probenkonzentration betrug 4 g/l, die Durchflussmenge 1,0 ml pro Minute. Es wurde gegen Polystyrol-Standards gemessen.

**B. Haftklebrigkeit**

Zur Bestimmung der Haftklebrigkeit wurden die einzelnen Beispiele auf PE, ABS und Polystyrolplatten angedrückt (Anpressdruck jeweils 19,6 $N/cm^2$) und diese Platten senkrecht aufgestellt.

Die beschriebenen Beispielproben besaßen eine genügend hohe Klebkraft, um ihr Eigengewicht für mindestens 30 min zu halten.

**Herstellung eines RAFT-Reglers:**

Die Herstellung des Reglers Bis-2,2'-phenylethyltrithiocarbonats erfolgte ausgehend von 2-Phenylethylbromid mit Dischwefelkohlenstoff und Natriumhydroxid nach einer Vorschrift von Synth. Comm., 1988, 18 (13), 1531. Ausbeute 72 %. $^1$H-NMR ($CDCl_3$), δ: 7,20-7,40 ppm (m, 10 H); 3,81 ppm (m, 1 H); 3,71 ppm (m, 1 H); 1,59 ppm (d, 3 H); 1,53 ppm (d, 3 H).

**Herstellung von Polystyrol (PS):**

In einem für die radikalische Polymerisation konventionellem 2 L Reaktor wurden unter Stickstoffatmosphäre 362 g Styrol und 3,64 g Regler Bis-2,2'-phenylethyltrithiocarbonat vorgelegt. Es wurde auf 110 °C Innentemperatur erhitzt und mit 0,15g Vazo 67® (DuPont) initiiert. Nach 10 Stunden Reaktionszeit wurden 100 g Toluol hinzugegeben. Nach 24 Stunden Reaktionszeit wurde mit weiteren 0,1 g Vazo 67® initiiert und weitere 24 Stunden polymerisiert. Während der Polymerisation steigt die Viskosität merklich an. Zur Kompensation wurden 150 g Toluol als Endverdünnung nach 48 Stunden hinzugegeben.

Zur Aufreinigung wurde das Polymer in 4,5 Liter Methanol gefällt, über eine Fritte abfiltriert und anschließend im Vakuumtrockenschrank getrocknet.
Die Durchführung der Gelpermeationschromatographie (Test A) gegen Polystyrol-Standards ergab $M_N$ = 29.300 g/mol und $M_W$ = 35.500 g/mol.

## Beispiel 1:

In einem zweiten Schritt wurden 59 g Polystyrol PS in einem für radikalische Polymerisationen konventionellen Reaktor mit 94,1 g Stearylacrylat, 174,7 g 2-Ethylhexylacrylat und 100 g Aceton/Siedegrenzenbenzin 60/95 (1:1) vermischt. Nach einer halbe Stunde Inertisieren unter Stickstoffgas wurde auf 60 °C Innentemperatur erhitzt und mit 0,15 g Vazo 67® (DuPont) gelöst in 5 g Aceton initiiert. Nach 1,5 Stunden Reaktionszeit wurde mit weiteren 0,15 g Vazo 67® gelöst in 5 g Aceton initiiert. Nach 3,5 Stunden wurde mit 50 g Aceton/Siedegrenzenbenzin 60/95 (1:1) verdünnt, nach 4,5 Stunden mit 50 g Aceton, nach 6,5 Stunden mit 70 g Aceton/Siedegrenzenbenzin 60/95 (1:1) und nach 7.5 Stunden mit 50 g Aceton. Die Polymerisation wurde nach 24 Stunden Reaktionszeit durch Abkühlen abgebrochen und durch Zugabe mit Siedegrenzenbenzin 60/95 auf 30 % herunterverdünnt.
Die Durchführung der Gelpermeationschromatographie (Test A) gegen Polystyrol Standards ergab $M_N$ = 112.000 g/mol und $M_W$ = 237.000 g/mol.

## Beispiel 2:

In einem zweiten Schritt wurden 84 g Polystyrol PS in einem für radikalische Polymerisationen konventionellen Reaktor mit 93 g Stearylacrylat, 173 g 2-Ethylhexylacrylat und 100 g Aceton/Siedegrenzenbenzin 60/95 (1:1) vermischt. Nach einer halbe Stunde Inertisieren unter Stickstoffgas wurde auf 60 °C Innentemperatur erhitzt und mit 0,15g Vazo 67® (DuPont) gelöst in 5 g Aceton initiiert. Nach 1,5 Stunden Reaktionszeit wurde mit weiteren 0,15 g Vazo 67® gelöst in 5 g Aceton initiiert. Nach 4 Stunden Reaktionszeit wurde mit weiteren 0,15 g Vazo 67® gelöst in 5 g Aceton initiiert. Nach 5 Stunden Reaktionszeit wurde mit weiteren 0,2 g Vazo 67® gelöst in 5 g Aceton initiiert. Nach 7 und 8 Stunden wurde mit jeweils 100 g Aceton/Siedegrenzenbenzin 60/95 (1:1) verdünnt. Die Polymerisation wurde nach 30 Stunden Reaktionszeit durch Abkühlen abgebrochen und durch Zugabe mit Siedegrenzenbenzin 60/95 auf 30 % herunter- verdünnt.
Die Durchführung der Gelpermeationschromatographie (Test A) gegen Polystyrol Standards ergab $M_N$ = 87.000 g/mol und $M_W$ = 166.000 g/mol. Zur weiteren Verwendung wurde das Polymer mit einem roten Lebensmittelfarbstoff gefärbt.

## Beispiel 3:

In einem für die radikalische Polymerisation konventionellem 2 L Reaktor wurden unter Stickstoffatmosphäre 40 g Acrylsäure, 40 g 2-Ethylhexylacrylat, 1,2 g Regler Bis-2,2'-phenylethyltrithiocarbonat und 80 g Aceton vorgelegt. Es wurde auf 60 °C Innentemperatur erhitzt und mit 0,2 g Vazo 67® (DuPont) gelöst in 5 g Aceton initiiert. Nach 1,5 Stunden Reaktionszeit wurde mit 0,2 g Vazo 67® (DuPont) gelöst in 5 g Aceton nachinitiiert. Nach 5 und 7 Stunden Reaktionszeit wurde mit jeweils 50 g Aceton verdünnt.
Nach 24 Stunden Reaktionszeit wurde eine Probe entnommen.
Die Durchführung der Gelpermeationschromatographie (Test A) gegen Polystyrol Standards ergab $M_N$ = 30.100 g/mol und $M_W$ = 35.300 g/mol.
Die Polymerisation wurde im gleichen Reaktor nach 24 h Reaktionszeit fortgesetzt. Zum Polymer wurden 320 g 2-Ethylhexylacrylat, 80 g Aceton und 20 g Isopropanol hinzugegeben. Nach 24,75 Stunden Reaktionszeit wurde mit 0,2 g Vazo 67® (DuPont) gelöst in 5 g Aceton nachinitiiert. Nach 28,5 und 32 Stunden wurde mit jeweils 50 g Aceton verdünnt. Nach 48 Stunden wurde mit 0,2 g Vazo 67® (DuPont) gelöst in 5 g Aceton nachinitiiert. Nach 55,5 Stunden wurden 20 g Aceton hinzugegeben und nach 72 Stunden wurde die Reaktion durch Abkühlen auf Raumtemperatur abgebrochen.

Die Durchführung der Gelpermeationschromatographie (Test A) gegen Polystyrol Standards ergab $M_N$ = 41.900 g/mol und $M_W$ = 77.400 g/mol.

## Beispiel 4:

In einem zweiten Schritt wurden 118 g Polystyrol PS in einem für radikalische Polymerisationen konventionellen Reaktor mit 34 g Stearylacrylat, 143 g 2-Ethylhexylacrylat und 100 g Aceton/Siedegrenzenbenzin 60/95 (1:2) vermischt. Nach einer halbe Stunde Inertisieren unter Stickstoffgas wurde auf 60 °C Innentemperatur erhitzt und mit 0,15 g Vazo 67® (DuPont) gelöst in 5 g Aceton initiiert. Nach 1,5 Stunden Reaktionszeit wurde mit weiteren 0,15 g Vazo 67® gelöst in 5 g Aceton initiiert. Nach 3,5 Stunden wurde mit 50 g Aceton/Siedegrenzenbenzin 60/95 (1:2) verdünnt, nach 4,5 Stunden mit 50 g Aceton, nach 6,5 Stunden mit 70 g Aceton/Siedegrenzenbenzin 60/95 (1:2) und nach 7.5 Stunden mit 50 g Aceton. Nach 24 Stunden Reaktionszeit wurde mit 0,15g Vazo 67® (DuPont) gelöst in 5 g Aceton nachinitiert. Die Polymerisation wurde nach 48

h durch Abkühlen abgebrochen und durch Zugabe mit Siedegrenzenbenzin 60/95 auf 30 % herunterverdünnt. Die Durchführung der Gelpermeationschromatographie (Test A) gegen Polystyrol Standards ergab $M_N$ = 72.000 g/mol und $M_W$ = 143.000 g/mol.

**Herstellung der Hotmelts:**

Die Beispiele 1 bis 4 wurden in einem Vakuumtrockenschrank bei 60 °C und 10 Torr aufkonzentriert und von ihrem Lösemittel befreit.

**Herstellung von Haftklebepads:**

**a)** Beispiel 1 wurde mit einer Temperatur von 170 °C und einer Beschichtungsgeschwindigkeit von 10 m/min an einer Pröls Beschichtungsanlage mit einer Schmelzdüse und 6 bar Druck auf einem mit 1,5 g/m$^2$ Polysiloxan beschichteten Trennpapier mit einem Masseauftrag von 250 g/m$^2$ beschichtet. Das auf das Trennpapier beschichtete Polymer wurde anschließend auf eine mit Saran geprimerte 25 µm dicke PET-Folie beidseitig beschichtet. Anschließend wurden auf beiden Polymeroberflächen wiederum mit Saran geprimerte 25 µm dicke PET-Folie laminiert, die wiederum mit dem Polymer beschichtet wurden. Das Laminat wurde zum Schluss mit Trennpapier abgedeckt und die Haftklebepads mit einem kreisrunden Rohling ausgestanzt. Das auf diese Weise mit verschiedenen Stabilisierungsfolien hergestellte Haftklebepad konnte leicht zur Verklebung von Papier mit verschiedenen Kunststoffen eingesetzt werden.

**b)** Beispielprobe 2 wurde mit einer Temperatur von 180 °C und einer Beschichtungsgeschwindigkeit von 10 m/min an einer Pröls Beschichtungsanlage mit einer Schmelzdüse und 6 bar Druck auf einem mit 1,5 g/m$^2$ Polysiloxan beschichteten Trennpapier mit einem Masseauftrag von 1000 g/m$^2$ beschichtet. Die offene Polymerseite wurde anschließend mit dem identischen Trennpapier abgedeckt und die haftklebrigen Pads wurden mit einem kreisrunden Rohling ausgestanzt.

**Herstellung von haftklebrigen Formteilen:**

Die Beispielproben 3 und 4 wurden in einer Schmelzkartusche bei 220 °C aufgeschmolzen und anschließend in eine herzförmige Form gegossen. Zur Auslösung der haftklebrigen Formteile aus der Form wurden die Formteile auf -20 °C abgekühlt.

Zur Bestimmung der Haftklebrigkeit wurden die Pads und haftklebrigen Formteile auf verschiedene Prüfplatten aufgebracht (s. Test B). Alle beschriebenen Muster besaßen eine genügend hohe Haftklebrigkeit, um Ihr Eigengewicht zu halten.

**Patentansprüche**

1. Formteil bestehend aus einem oder mehreren Blockcopolymeren auf Polyacrylatbasis oder Mischungen enthaltend derartige Blockcopolymere, **gekennzeichnet durch** inhärente haftklebrige Eigenschaften.

2. Formteil nach Anspruch 1, **dadurch gekennzeichnet, dass**
die Formteile eine hinreichend hohe Haftklebrigkeit aufweisen, um ihr Eigengewicht mindestens 30 min auf zumindest einem der Materialien Polyethylen, ABS (Acrylnitril-Butadien-Styrol-Copolymere) und/ oder Polystyrol zu halten, wenn sie mit einem Anpressdruck von 19,6 N/cm$^2$ auf eine Probefläche dieses Materials gedrückt wurden.

3. Formteil nach zumindest einem der vorangehenden Ansprüche, **dadurch gekennzeichnet, dass**
die Blockcopolymere eine Abfolge von zumindest einem Polymerblock oder Copolymerblock $P_H$ mit einer Glasübergangstemperatur von nicht mehr als 10 °C und von zumindest einem Polymerblock oder Copolymerblock $P_W$ mit einer Glasübergangstemperatur von zumindest 20 °C aufweisen.

4. Formteil nach Anspruch 3, **dadurch gekennzeichnet, dass**
die Blockcopolymere zumindest eine Triblockstruktur der Form $P_W$-$P_H$-$P_W$ und/oder $P_H$-$P_W$-$P_H$ aufweisen.

5. Formteil nach zumindest einem der vorangehenden Ansprüche, **dadurch gekennzeichnet, dass**
die Blockcopolymere zumindest eine funktionelle Gruppe aufweisen, welche sich in einer radikalischen Polymerisationsreaktion inert verhält und welche eine Vernetzungsreaktion der Polymere zu fördern vermag.

6. Herstellung von Formteilen nach zumindest einem der vorangehenden Ansprüche, **dadurch gekennzeichnet, dass**
die Formteile durch Stanzung, durch Formpressung oder durch das Spritzgießverfahren erzeugt werden.

7. Verwendung von Formteilen nach zumindest einem der Ansprüche 1 bis 4 zur einseitigen oder doppelseitigen Verklebung von Substraten.

8. Verwendung von Formteilen nach zumindest einem der Ansprüche 1 bis 4 als Dichtmaterial.

9. Verwendung von Formteilen nach zumindest einem der Ansprüche 1 bis 4 in der Automobilindustrie.

Europäisches Patentamt

# EUROPÄISCHER RECHERCHENBERICHT

Nummer der Anmeldung
EP 03 02 1406

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| X | WO 00 39233 A (HAESE FRANCOIS C D ;MA JINGJING (US); EVERAERTS ALBERT I (US); MIN) 6. Juli 2000 (2000-07-06)<br>* Ansprüche 1-13,17-20,21,34,39-62 ; Seite 1, Zeile 1-10 ; Seite 2, Zeile 12-16 ; Seite 6, Zeile 7-21 ; Zusammenfassung ; Seite 24, Zeile 8 - Seite 25, Zeile 27 *<br>* Seite 10, Zeile 10 - Seite 24, Zeile 6 *<br>--- | 1-9 | C09J153/00<br>C08F293/00 |
| X | EP 0 921 170 A (ATOCHEM ELF SA)<br>9. Juni 1999 (1999-06-09)<br>* Ansprüche 1-9, 13-40 *<br>* Seite 2, Zeile 1 - Seite 14, Zeile 50 *<br>--- | 1-9 | |
| X | WO 93 20164 A (MINNESOTA MINING & MFG)<br>14. Oktober 1993 (1993-10-14)<br>* Zusammenfassung ; Ansprüche 1-10 ; Seite 10, Zeile 6-17 ; Seite 1, Zeile 1-11 *<br>* Seite 18, Zeile 1 - Seite 24, Zeile 10 *<br>--- | 1-9 | **RECHERCHIERTE SACHGEBIETE (Int.Cl.7)** |
| P,X | EP 1 270 701 A (TESA AG)<br>2. Januar 2003 (2003-01-02)<br>* Ansprüche 1-13 ; Seite 2, Zeile 1 - Seite 8, Zeile 7 *<br>* Zusammenfassung *<br>--- | 1-5,7-9 | C09J<br>C08L<br>C08F<br>C09D |
| P,X | EP 1 270 700 A (TESA AG)<br>2. Januar 2003 (2003-01-02)<br>* Ansprüche 1-13 ; Seite 2, Zeile 1 - Seite 8, Zeile 9 *<br>* Zusammenfassung *<br>---<br>-/-- | 1-5,7-9 | |

Der vorliegende Recherchenbericht wurde für alle Patentansprüche erstellt

| Recherchenort | Abschlußdatum der Recherche | Prüfer |
|---|---|---|
| DEN HAAG | 20. Januar 2004 | Hammond, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie,übereinstimmendes Dokument

EPO FORM 1503 03.82 (P04C03)

Europäisches Patentamt

# EUROPÄISCHER RECHERCHENBERICHT

Nummer der Anmeldung
EP 03 02 1406

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| P,X | EP 1 270 699 A (TESA AG)<br>2. Januar 2003 (2003-01-02)<br>* Ansprüche 1-13 ; Seite 8, Zeile 29-31, 40-43 ; Seite 9, Zeile 10-24 ; Beispiele und Resultate ; Seite 3, Zeile 30 - Seite 8, Zeile 31 *<br>* Zusammenfassung *<br>--- | 1-5,7-9 | |
| X | EP 1 008 640 A (NITTO DENKO CORP)<br>14. Juni 2000 (2000-06-14)<br>* Ansprüche 1-20 ; Seite 2, Zeile 5 - Seite 11, Zeile 15 ; Zusammenfassung ; Beispiele *<br>--- | 1-9 | |
| A | EP 1 094 086 A (NIPPON CATALYTIC CHEM IND)<br>25. April 2001 (2001-04-25)<br>* Zusammenfassung ; Beispiele ; Ansprüche 1-8 *<br>--- | 1-9 | |
| A | EP 0 349 232 A (MINNESOTA MINING & MFG)<br>3. Januar 1990 (1990-01-03)<br>* Zusammenfassung; Ansprüche 1-9 *<br>----- | 1-9 | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| DEN HAAG | 20. Januar 2004 | Hammond, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................
& : Mitglied der gleichen Patentfamilie,übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 03 02 1406

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-01-2004

| Im Recherchenbericht angeführtes Patentdokument | Datum der Veröffentlichung | Mitglied(er) der Patentfamilie | Datum der Veröffentlichung |
|---|---|---|---|
| WO 0039233 A | 06-07-2000 | WO 0039233 A1 | 06-07-2000 |
| | | AU 2097799 A | 31-07-2000 |
| | | EP 1144534 A1 | 17-10-2001 |
| | | JP 2002533556 T | 08-10-2002 |
| EP 0921170 A | 09-06-1999 | FR 2771747 A1 | 04-06-1999 |
| | | EP 0921170 A1 | 09-06-1999 |
| WO 9320164 A | 14-10-1993 | EP 0633918 A1 | 18-01-1995 |
| | | JP 7505431 T | 15-06-1995 |
| | | WO 9320164 A1 | 14-10-1993 |
| EP 1270701 A | 02-01-2003 | DE 10129611 A1 | 09-01-2003 |
| | | EP 1270701 A2 | 02-01-2003 |
| | | JP 2003055631 A | 26-02-2003 |
| | | US 2003013790 A1 | 16-01-2003 |
| EP 1270700 A | 02-01-2003 | DE 10129612 A1 | 09-01-2003 |
| | | EP 1270700 A2 | 02-01-2003 |
| | | JP 2003041223 A | 13-02-2003 |
| | | US 2003073767 A1 | 17-04-2003 |
| EP 1270699 A | 02-01-2003 | DE 10129609 A1 | 09-01-2003 |
| | | EP 1270699 A2 | 02-01-2003 |
| | | JP 2003055630 A | 26-02-2003 |
| | | US 2003096111 A1 | 22-05-2003 |
| EP 1008640 A | 14-06-2000 | JP 2001115124 A | 24-04-2001 |
| | | EP 1008640 A1 | 14-06-2000 |
| | | US 6432475 B1 | 13-08-2002 |
| EP 1094086 A | 25-04-2001 | US 6310175 B1 | 30-10-2001 |
| | | EP 1094086 A1 | 25-04-2001 |
| EP 0349232 A | 03-01-1990 | AT 89572 T | 15-06-1993 |
| | | AU 616770 B2 | 07-11-1991 |
| | | AU 3706389 A | 04-01-1990 |
| | | DE 68906602 D1 | 24-06-1993 |
| | | DE 68906602 T2 | 04-11-1993 |
| | | EP 0349232 A2 | 03-01-1990 |
| | | ES 2055063 T3 | 16-08-1994 |
| | | JP 2045511 A | 15-02-1990 |
| | | MX 173261 B | 14-02-1994 |

EPO FORM P0461

Für nähere Einzelheiten zu diesem Anhang : siehe Amtsblatt des Europäischen Patentamts, Nr.12/82